# EUROPEAN PATENT SPECIFICATION

(11) **EP 2 472 985 B1**
(45) Date of publication and mention of the grant of the patent: **07.08.2013**
(21) Application number: 10016164.5
(22) Date of filing: 29.12.2010
(51) Int. Cl.: H04W 76/02

(54) **Method for the use of a circuit switched (CS) service in an evolved packet system, user equipment, core network, program comprising a computer readable program code, and computer program product**
Verfahren zur Verwendung eines leitungsvermittelten Dienstes (CS-Dienstes) in einem evolvierten Paketsystem, Teilnehmergerät, Kernnetz, Programm, das einen computerlesbaren Programmcode umfasst, und Computerprogrammprodukt
Procédé d'utilisation d'un service de circuit commuté dans un système de paquet évolué, équipement d'utilisateur, réseau central, programme comportant un code de programme lisible sur ordinateur et produit de programme informatique

(43) Date of publication of application: 04.07.2012
(73) Proprietor: Deutsche Telekom AG, 53113 Bonn (DE)
(72) Inventor: Nenner, Karl-Heinz, 53332 Bornheim (DE); Jacobsohn, Dieter, 53229 Bonn (DE)
(74) Representative: Schwöbel, Thilo K.

(56) References cited:
- WO-A1-2005/039132
- WO-A2-2007/089586
- "3rd Generation Partnership Project; Technical Specification Group Services and System Aspects; Architectural requirements (Release 9)", 3GPP STANDARD; 3GPP TS 23.221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 10 June 2010 (2010-06-10), pages 1-48, XP050441556, [retrieved on 2010-06-10]

## Description

### BACKGROUND

The present invention relates inter alia to a method for the use of a Circuit Switched (CS) service by a User Equipment attached to a core network of an Evolved Packet System (EPS) mobile communication network.

The third Generation Partnership Project (3GPP) has specific functions for Evolved Packet System (EPS) networks and devices that allow them to use the traditional Circuit Switched (CS) services that are today offered by Global System of Mobile Communication (GSM) and Universal Mobile Telecommunication System (UMTS) networks.

The motivation for this feature is that Circuit Switched (CS) services, such as today's voice and SMS services, are not available on the Evolved Packet System (EPS) due to the fact that Evolved Packet System (EPS) offers Packet Switched (PS) services only.

Hence functionality is needed to allow Evolved Packet System (EPS) terminals to use Circuit Switched (CS) services in case there is no equivalent service available on the Evolved Packet System (EPS) network. For example, in the absence of a native "Voice-over-LTE" solution on the serving EPS network (or in case the terminal (or User Equipment) chooses for other reasons, such as its voice configuration), terminals may request the registration for Circuit Switched (CS) services via the Evolved Packet System (EPS), whereby the terminal is registered on the Circuit Switched (CS) domain (i.e. with a Mobile Switching Center (MSC) on the GSM/UMTS Circuit Switched (CS) network) by the Evolved Packet System (EPS). Subsequently, the terminals may use the services offered by the Circuit Switched (CS) domain while they continue to be registered in the Evolved Packet System (EPS). In order to do this, the terminal tunes to a GERAN (GPRS/EDGE radio access network) or UTRAN (UMTS Terrestrial radio access network) cell of a CS-enabled network when a CS service is invoked. This functionality is called Circuit Switched Fallback (CSFB) and is specified in Third Generation Partnership Project (3GPP) TS 23.272, e.g. in Version 9.5.0 of October 2010.

In Circuit Switched Fallback (CSFB), the registration of the terminal (or User Equipment) on the CS-domain is performed by the Mobility Management Entity (MME) via the SGs interface between the Mobility Management Entity (MME) and the Mobile Switching Center (MSC). The selection of the Mobile Switching Center (MSC), and the assignment of the location information on the CS-domain of the network (Location Area Code (LAC)), is performed by the Mobility Management Entity (MME) based on local configuration.

According to ETSI TR 21.905 V8.8.0, the term MME stands for Mobile Management Entity; according to TS23.401, V8.6.0 this term stands for Mobility Management Entity; hereinafter, the term Mobility Management Entity is used.

Mobile Switching Center (MSC) registration via the SGs interface may occur for SMS only. In which case the terminal may send and receive SMS messages while it stays on the E-UTRAN radio access, whereby the messages will be transferred via the Mobile Switching Center (MSC); i.e. mobile originating messages will be sent by the terminal (or User Equipment) via E-UTRAN to the Mobility Management Entity (MME), which will pass them on to the Mobile Switching Center (MSC) via SGs, and the Mobile Switching Center (MSC) then passes them further on towards the Short Message Service Center (SMSC) as in the traditional GSMIUMTS CS-based SMS service. The inverted sequence (i.e. Short Message Service Center (SMSC) → Mobile Switching Center (MSC) → Mobility Management Entity (MME) → E-UTRAN → Terminal/User Equipment) takes place for mobile terminated SMS. Since the terminal (or User Equipment) stays on the E-UTRAN access when sending or receiving short messages, the Evolved Packet System (EPS) data service is not impacted.

Alternatively, registration of the terminal on the Mobile Switching Center (MSC) via SGs may occur for all Circuit Switched (CS) services, including SMS. In this case, the terminal will use SMS as described above, but for all other Circuit Switched (CS) services the terminal performs a "fallback" to a radio access of the CS-domain, i.e. it tunes to either a GERAN or an UTRAN target cell. Thereby, the terminal leaves E-UTRAN radio coverage for the execution of a Circuit Switched (CS) service, such as voice, leading to a loss of the Evolved Packet System (EPS) data service (at least) for the duration of the Circuit Switched (CS) service execution. Depending on implementation, the terminal may be able to resume the data service on the GERAN/UTRAN target cell, i.e. by using the PS-domain on the target GERAN or UTRAN cell. In today's networks, the required functionality for Packet Switched (PS) service continuation is commonly available in UTRAN but not in GERAN. In any case, the Packet Switched (PS) service available to the terminal/User Equipment on GSM/GERAN or UMTS/UTRAN will be inferior to the Evolved Packet System (EPS)/E-UTRAN data service due to e.g. limited bandwidth or reduced quality of service.

Normally, a terminal (or User Equipment) may support multiple radio accesses on various frequencies (e.g. quad-band GSM and triple-band UMTS), but usually terminals are active on only one frequency in one radio access at any given point in time. This "single-radio" operation applies to virtually all GSM/UMTS terminals and is also a characteristic of CSFB operation as described above. However, there have also been implementations of "dual-radio" terminals, i.e. the terminal is simultaneously active in two different radio accesses, in particular a "3GPP access" such as GERAN or UTRAN, and a "non-3GPP access" such as WLAN/WiFi. Generally, this enables the terminal to use services on both accesses simultaneously, e.g. surfing the web on WLAN and making a voice call on GERAN. In such a situation, there is typically no link between the two radios in such a terminal, e.g. functions such as mobility management (MM) and session management (SM) are completely independent, and no coordination exists between the two radios. A particular aspect of this lack of coordination is that both radios need to be active all the time if it is desired that the services offered via either access are available all the time. For example, if the terminal is used for web browsing via WLAN, the second (e.g. GERAN) radio also has to be constantly online in order to be able to receive voice calls or SMS.

As can be seen by the above, Circuit Switched Fallback (CSFB) as specified by 3GPP has multiple drawbacks:
-- The terminal looses its Packet Switched (PS) connection on E-UTRAN every time it has to fall back to a CS capable access for the purpose of using a CS service (except SMS). This leads to a degradation of the concurrent PS service in UTRAN and usually the loss of the concurrent PS session in GERAN ("lack of DTM").
-- Depending on the implementation, the call setup time is significantly longer than calling directly in CS accesses - especially when both A and B party use Circuit Switched Fallback (CSFB).
-- The terminal might perform a fallback also for non-voice services, which may be very disturbing for the user.
-- As can be seen from the procedures specified in TS 23.272, the single-radio operation of Circuit Switched Fallback (CSFB) is quite complex:
   a) There are many options for the mobility procedures towards the target radio access.
   b) There are different mobility options of Circuit Switched Fallback (CSFB) towards GERAN vs. Circuit Switched Fallback (CSFB) towards UTRAN, mainly due to the lack of more sophisticated mechanisms ("PS Handover") in GERAN.
   c) In order to enable the continuation on the (anyway lesser quality) PS session after Circuit Switched Fallback (CSFB), the Mobile Switching Center (MSC) implementation must be able to switch from a SGs association with the Mobility Management Entity (MME) to a Gs association with an SGSN. The Gs association is implemented today in many networks for simultaneous CS/PS operation in UTRAN and, generally, better use of network resources for terminals that are both CS- and PS-capable. However, the coordination with the SGs association with the Mobility Management Entity (MME) for Circuit Switched Fallback (CSFB) is a new requirement.
-- Due to the mobility procedure for Circuit Switched Fallback (CSFB) towards the target cell, there is a certain service interruption for the packet session until it can be resumed in the target cell (if at all). The service interruption time depends on the used mobility procedure and roughly coincides with the increase of the call setup time compared with "native CS", i.e. current terminals accessing the CS domain via UTRAN or GERAN.
-- Furthermore, the case that the mobility procedure fails (especially if Packet Switched (PS) handover is used) may result in the loss of the (CS) call, hence the call setup will be inferior to today's service.
-- It is possible that the terminal has to wait after call completion for an unspecified time until in returns to EPS service.
-- It is possible that the terminal returns to EPS too early, e.g. when another CS service is invoked shortly after completion of a call.
-- The functionality specified in 3GPP for the reduction of idle-mode location update signaling between E-UTRAN access and UTRAN/GERAN access ("ISR") must be deactivated when the terminal performs an update towards the Packet Switched (PS) domain via GERAN/UTRAN.

Applying the existing dual radio operation has the following drawbacks:
-- Both radios must be constantly in operation in order to be reachable for all services, e.g. both CS service on GERAN and PS service on WLAN. This will lead to a high power drain and therefore short battery life until the terminal has to be recharged.

Document WO 2005/039132 A1 discloses a system, apparatus, and method for establishing circuit switched communications via packet switched network signaling. According to the method disclosed in this document, services are provided via a packet-switched (PS) multimedia network to users communicating in a circuit-switched (CS) domain. A dialog is established between terminals through the PS multimedia network. A service is provided to at least one of the terminals by way of the dialog. CS bearer information, including an indication that a communication flow is requested via a CS network, is communicated between the terminals, also by way of the dialog. A communication flow via the CS network is effected between the terminals as directed by the CS bearer information.

### SUMMARY

An object of the present invention is to provide a method for the use of a Circuit Switched (CS) service by a User Equipment attached to a core network of
-- an Evolved Packet System (EPS) mobile communication network and
-- a CS-domain of a GSM/UMTS mobile communication network,
wherein it is possible to coordinate a first radio interface of the User Equipment (or terminal) and a second radio interface of the User Equipment (or terminal). A further object of the present invention is to provide a User Equipment for the use of a Circuit Switched (CS) service while being attached to a core network of
-- an Evolved Packet System (EPS) mobile communication network and
-- a CS-domain of a GSM/UMTS mobile communication network, a Core Network, a program comprising a computer readable program code for controlling a User Equipment, and a computer program product.

The object of the present invention is achieved by a method for the use of a Circuit Switched (CS) service by a User Equipment attached to a core network of
-- an Evolved Packet System (EPS) mobile communication network and
-- a CS-domain of a GSM/UMTS mobile communication network, wherein the User Equipment comprises a first radio interface and a second radio interface, the first radio interface being able to be used for the communication of the User Equipment in the Evolved Packet System (EPS) and the second radio interface being able to be used for the communication of the User Equipment in the CS-domain of a GSM/UMTS mobile communication network, wherein in case that
-- the User Equipment is attached to the Evolved Packet System (EPS) and
-- the use of a CS-domain service is needed
the second radio interface is automatically activated for the communication of the User Equipment in the CS-domain of the GSM/UMTS mobile communication network, while an attachment and the communication of the User Equipment to the Evolved Packet System (EPS) is maintained via the first radio interface.

According to the present invention, it is thereby advantageously possible that the above mentioned disadvantages of both the known implementation of Circuit Switched Fallback (CSFB) and the known dual radio implementations can be avoided. The basic idea is to provide - in addition to a first radio (or a first radio interface) - a second - Circuit Switched (CS)-capable - radio (or second radio interface) into the E-UTRAN capable terminal, but enabling the second radio (or radio interface) only when needed for CS service, instead of performing a Circuit Switched Fallback (CSFB). In combination with existing Circuit Switched Fallback (CSFB) functionality, this means that the GERAN or UTRAN radio will only be enabled when a fallback is triggered as in the known implementation of Circuit Switched Fallback (CSFB). However, using the invention, the terminal (or User Equipment) will continue to be connected to the E-UTRAN (via the first radio interface) and will simultaneously be connected to the CS domain of a GERAN or UTRAN access when a CS service is invoked. Consequently, no mobility procedure towards the target (Circuit Switched) access is needed.

According to the present invention, the terminal will perform the same "combined attach" to the EPS as specified for CSFB today.
When a CS fallback is invoked, instead of tuning the - single - (or first) radio (interface) to the CS capable access, the second, i.e. the CS capable, radio (interface) will be activated and used for the CS service execution, while the terminal (or User Equipment) stays connected to the EPS at the same time.
Any of the methods specified in CSFB for selecting the CSFB target cell (e.g. radio measurements) can be reused but the second radio (interface) is applied instead of retuning the first (E-UTRAN) radio (interface) to the target cell.
During the period that both radios are active, independent Mobility Management (MM) and Session Management (SM) take place so that both sessions can be maintained while the UE moves around.
When the CS service completes, it is possible and preferred according to the present invention
-- that the CS capable radio is turned off (for example immediately or after a predetermined time interval) or
-- that the same decision that normally leads the terminal (having a single-radio interface) to retune to E-UTRAN can now be used to turn off the CS capable radio.
Other mechanisms to trigger this event are also possible - this is now fairly uncritical because the EPS service continues to work even during the "guard period" that the terminal may remain connected to the CS access.

Due to the fact that the terminal (or User Equipment) stays in E-UTRAN all the time, i.e. does not perform a mobility procedure to connect to the PS domain in GERAN/UTRAN in any part of the proposed dual-radio operation of CSFB, it is possible to save PS location updating signalling in both GERAN/UTRAN and E-UTRAN accesses. A consequence thereof is that it is not necessary (not even possible) to disable ISR (Idle mode Signalling Reduction). Further, due to this lack of a mobility procedure towards the target access system, the invention can be implemented by reusing only a small subset of the E-UTRAN functionality specified in today's CSFB, e.g. the solicitation and control of neighbour cell measurements that may be invoked when a CSFB is triggered in order to identify the best suitable target cell. Alternatively, the invention can be implemented without any functionality required in the E-UTRAN, e.g. when the neighbour cell measurements are not necessary / not required ("blind handover" or UE autonomous measurements), or when they are controlled by the Core Network instead of the E-UTRAN. Either way, this is a major advantage over the CSFB according to the state of the art.

According to a preferred embodiment of the present invention, in case that
-- the User Equipment is attached to the Evolved Packet System (EPS) and
-- no CS-domain service is needed
the second radio interface is automatically deactivated or at least partly or temporarily deactivated, while the connection of the User Equipment with the Evolved Packet System (EPS) is maintained via the first radio interface.

In order to stay connected via both accesses, Mobility Management (MM) and Session Management (SM) also have to be independent in the two radios, so that the terminal can stay connected in a CS access and the E-UTRAN at the same time. However, unlike today's dual radio terminals, the second radio (interface) will be controlled by the invocation of a CS service using Circuit Switched Fallback (CSFB) methods. The CS-compatible (second) radio (interface) can thus be enabled and disabled, e.g., when the normal trigger occurs for the User Equipment (or terminal) to execute a CS service or to return to E-UTRAN, respectively. Other alternative possibilities are possible for using, especially disabling, the second radio interface:
-- It is possible according to the present invention that after the completion of a (Circuit Switched (CS)) call, the second radio interface is still operative for a certain period of time even after completion of the call. This is advantageous for a subsequent call establishment, e.g. a call back.
-- Alternatively, it is possible and preferred according to the present invention that the second radio interface is turned off immediately. This is advantageous for enhancing battery life of the User Equipment.

According to the present invention, it is preferred that:
-- a first control information is transmitted from the User Equipment to the core network indicating that the User Equipment comprises a first radio interface and a second radio interface, the first radio interface being able to be used for the communication of the User Equipment with the Evolved Packet System (EPS) and the second radio interface being able to be used for the simultaneous communication of the User Equipment with the CS-domain of a GSM/UMTS mobile communication network, and/or that
-- a second control information is transmitted from the core network to the User Equipment indicating that the core network supports the simultaneous communication of the User Equipment with the Evolved Packet System (EPS) mobile communication network and the use of the CS-domain service of the GSM/UMTS mobile communication network.

Thereby, it is advantageously possible according to the present invention, that terminals that use the existing CSFB and terminals that use the inventive method coexist on one and the same network (which is enabled for both the known Circuit Switched Fallback (CSFB) mechanism and the handling of terminals having two radio interfaces according to the present invention). It is also possible that one and the same terminal implements both the existing CSFB (according to the prior art) and the inventive method so that it is possible for such a terminal to use CS services in any EPS network that offers at least one of the two mechanisms
Hence, networks can offer both mechanisms so that any terminal that offers at least one of the two mechanisms may use CS services. In order to enable this, the present invention provides a possibility for making the network aware of which mechanism the UE supports. This is achieved by the first control information, e.g. by notifying the network of the terminal's capabilities (extension of the existing "UE capabilities"-mechanism), or by providing this information when the UE asks to be registered for CS services (extension of today's combined procedures for CSFB). Furthermore, the present invention preferably provides a possibility for making the terminal (or User Equipment) aware of which mechanism the network supports. This is achieved by the second control information, e.g. by notifying the terminal of the network's capabilities.

According to the present invention, it is furthermore preferred that the second radio interface is used such that the carrier frequency used by the first radio interface and the carrier frequency used by the second radio interface are offset by a minimum offset frequency of at least 500 MHz, preferably by at least 1000 MHz.

Such a frequency offset is needed between the two simultaneously operating radios on the terminal in order to be able to send and receive on both of them without interference to the other. In today's CSFB, the frequency of the E-UTRAN compared to the frequency of the target CS cell in UTRAN or GERAN, is of no concern. Therefore, according to the present invention, it is advantageous that a component is provided such that the target CS cell can be selected based on the knowledge whether existing CSFB or the method according to the present invention will be used, thereby assuring for the latter case that a target cell will be used that has a sufficient frequency offset (of the carrier frequency) from the (carrier frequency used by the) E-UTRAN radio layer.
Typical Examples include:
-- If the E-UTRAN of the EPS network uses 2.600MHz, then the selected target cell might be in the 900MHz GERAN band;
-- If the E-UTRAN of the EPS network operates in the digital dividend band, e.g. 700/800MHz spectrum, then the selected target cell might be in the 1800MHz GERAN or 1900/2100 UTRAN band.
-- In contrast, in existing CSFB the target radio access is selected via configuration in the E-UTRAN.

According to the present invention, the following advantages are possible to realize (especially compared with CSFB and dual-radio techniques according to the state of the art):
-- EPS / E-UTRAN sessions can be operated simultaneously with CS services.
-- The EPS / E-UTRAN connection / session will remain intact and completely unaffected from the concurrent CS service.
-- No mobility procedure towards the CS target cell is needed in either the network or the terminal. Once the CS target cell is selected, the second radio (interface) is simply activated on that cell.
-- Due to the previous point, there is no interruption of the PS service until it can possibly be resumed in the target cell's PS domain.
-- There is no conflict between the desire to return to E-UTRAN immediately after completion of the CS service, and staying on CS for some time to wait for a potential additional service invocation (e.g. callback or another call by the user). In fact, due to the absence of complex mobility procedures (e.g. for making the second call), the second radio interface can be disabled right after completion of the CS service in order to minimize battery drain.
-- Implementation on the MSC is largely simplified because the terminal will connect only to the CS domain of the GSM/UMTS network. Hence the coordination between a SGs- and a Gs-association by the MSC is not needed.

The invention makes use of existing CSFB functions as much as possible and enhances them where necessary for the dual radio operation in a way that the described advantages are realized. No modification of existing mobility functions between GERAN/UTRAN/E-UTRAN accesses, as specified by 3GPP, is required according to the present invention.

It is important to note that the invention can also be used in other network designs. For example, it is conceivable that, when using UTRAN access, only a Packet Switched (PS) domain is provided, whereas when using GERAN access a CS domain is provided. While CSFB is not specified for this scenario, the present invention can be used in such networks with no functional modification, i.e. every time when the Evolved Packet System (EPS) is addressed it should be replaced by the Packet Switched (PS) domain of the UMTS mobile communication network.

Therefore and according to second embodiment of the present invention, the object of the present invention is also achieved by a method for the use of a Circuit Switched (CS) service by a User Equipment attached to a core network of
-- a Packet Switched (PS) domain of a Universal Mobile Telecommunications System (UMTS) mobile communication network and
-- a CS-domain of a GSM/UMTS mobile communication network, wherein the User Equipment comprises a first radio interface and a second radio interface, the first radio interface being able to be used for the communication of the User Equipment in the Packet Switched (PS) domain of the UMTS mobile communication network and the second radio interface being able to be used for the communication of the User Equipment in the CS-domain of a GSM/UMTS mobile communication network, wherein in case that
-- the User Equipment is attached to the Packet Switched (PS) domain of the UMTS mobile communication network and
-- the use of a CS-domain service is needed
the second radio interface is automatically activated for the communication of the User Equipment in the CS-domain of the GSM/UMTS mobile communication network, while an attachment and the communication of the User Equipment to the Packet Switched (PS) domain of the UMTS mobile communication network is maintained via the first radio interface.

According to the second embodiment, it is preferred according to the present invention that:
-- in case that
   -- the User Equipment is attached to the Packet Switched (PS) domain of the UMTS mobile communication network and
   -- no CS-domain service is needed
the second radio interface is automatically deactivated or at least partly or temporarily deactivated, while the attachment and the communication of the User Equipment to the Packet Switched (PS) domain of the UMTS mobile communication network is maintained via the first radio interface, and/or that
-- a first control information is transmitted from the User Equipment to the core network indicating that the User Equipment comprises a first radio interface and a second radio interface, the first radio interface being able to be used for the communication of the User Equipment in the Packet Switched (PS) domain of the UMTS mobile communication network and the second radio interface being able to be used for the communication of the User Equipment in the CS-domain of a GSM/UMTS mobile communication network, and/or that
-- a second control information is transmitted from the core network to the User Equipment indicating that the core network supports the simultaneous communication of the User Equipment in the Packet Switched (PS) domain of the UMTS mobile communication network and the use of the CS-domain service of the GSM/UMTS mobile communication network.

The present invention also relates to a User Equipment for the use of a Circuit Switched (CS) service while being attached to a core network of
-- an Evolved Packet System (EPS) mobile communication network and
-- a CS-domain of a GSM/UMTS mobile communication network,
wherein the User Equipment comprises a first radio interface and a second radio interface, the first radio interface being able to be used for a communication of the User Equipment in the Evolved Packet System (EPS) and the second radio interface being able to be used for a communication of the User Equipment in the CS-domain of a GSM/UMTS mobile communication network, wherein in case that
-- the User Equipment is attached to the Evolved Packet System (EPS) and
-- the use of a CS-domain service is needed
the second radio interface is automatically activated for the communication of the User Equipment to the CS-domain of the GSM/UMTS mobile communication network, while an attachment and the communication of the User Equipment to the Evolved Packet System (EPS) is maintained via the first radio interface.

The present invention also relates to a User Equipment for the use of a Circuit Switched (CS) service while being attached to a core network of
-- a Packet Switched (PS) domain of a Universal Mobile Telecommunications System (UMTS) mobile communication network and
-- a CS-domain of a GSM/UMTS mobile communication network,
wherein the User Equipment comprises a first radio interface and a second radio interface, the first radio interface being able to be used for a communication of the User Equipment in the Packet Switched (PS) domain of the UMTS mobile communication network and the second radio interface being able to be used for a communication of the User Equipment in the CS-domain of a GSM/UMTS mobile communication network, wherein in case that
-- the User Equipment is attached to the Packet Switched (PS) domain of the UMTS mobile communication network and
-- the use of a CS-domain service is needed
the second radio interface is automatically activated for the communication of the User Equipment to the CS-domain of the GSM/UMTS mobile communication network, while an attachment and the communication of the User Equipment to the Packet Switched (PS) domain of the UMTS mobile communication network is maintained via the first radio interface.

Thereby, it is advantageously possible to use the present invention with any mobile terminal or User Equipment that comprises two different radio interfaces (i.e. a first radio interface being able to be used for the communication of the User Equipment in the Evolved Packet System (EPS) and the second radio interface being able to be used for a communication of the User Equipment in the CS-domain of a GSM/UMTS mobile communication network).

It is to be noted that according to the present invention, the term "radio interface" is to be understood as a complete radio interface comprising all the necessary electronic modules and components such that an operation within a mobile network environment independent from the other radio interface is possible.

According to the present invention, it is preferred that in case that
-- the User Equipment is attached to the Evolved Packet System (EPS) and
-- no CS-domain service is needed
the second radio interface is automatically deactivated or at least partly or temporarily deactivated, while an attachment and the communication of the User Equipment to the Evolved Packet System (EPS) is maintained via the first radio interface.

Furthermore, it is preferred according to the present invention that the second radio interface is used such that the carrier frequency used by the first radio interface and the carrier frequency used by the second radio interface are offset by a minimum offset frequency of at least 500 MHz, preferably by at least 1000 MHz.

The present invention also relates to core network for the use of a Circuit Switched (CS) service in an Evolved Packet System (EPS) mobile communication network by a User Equipment, wherein the core network is a core network of
-- an Evolved Packet System (EPS) mobile communication network and
-- a CS-domain of a GSM/UMTS mobile communication network,
wherein in case the User Equipment comprises a first radio interface and a second radio interface, the first radio interface is able to be used for a communication of the User Equipment in the Evolved Packet System (EPS) and the second radio interface is able to be used for a communication of the User Equipment in the CS-domain of a GSM/UMTS mobile communication network, wherein in case that
-- the User Equipment is attached to the Evolved Packet System (EPS) and
-- the use of a CS-domain service is needed
the second radio interface is automatically activated for the communication of the User Equipment in the CS-domain of the GSM/UMTS mobile communication network, while an attachment and the communication of the User Equipment to the Evolved Packet System (EPS) is maintained via the first radio interface.

The present invention also relates to core network for the use of a Circuit Switched (CS) service in a Packet Switched (PS) domain of the UMTS mobile communication network by a User Equipment, wherein the core network is a core network of
-- a Packet Switched (PS) domain of a Universal Mobile Telecommunications System (UMTS) mobile communication network and
-- a CS-domain of a GSM/UMTS mobile communication network,
wherein in case the User Equipment comprises a first radio interface and a second radio interface, the first radio interface is able to be used for a communication of the User Equipment in the Packet Switched (PS) domain of the UMTS mobile communication network and the second radio interface is able to be used for a communication of the User Equipment in the CS-domain of a GSM/UMTS mobile communication network, wherein in case that
-- the User Equipment is attached to the Packet Switched (PS) domain of the UMTS mobile communication network and
-- the use of a CS-domain service is needed
the second radio interface is automatically activated for the communication of the User Equipment in the CS-domain of the GSM/UMTS mobile communication network, while an attachment and the communication of the User Equipment to the Packet Switched (PS) domain of the UMTS mobile communication network is maintained via the first radio interface.

Furthermore, the present invention relates to a program comprising a computer readable program code for controlling a User Equipment attached to a core network of
-- an Evolved Packet System (EPS) mobile communication network and
-- a CS-domain of a GSM/UMTS mobile communication network,
wherein the User Equipment comprises a first radio interface and a second radio interface, the first radio interface being able to be used for the communication of the User Equipment in the Evolved Packet System (EPS) and the second radio interface being able to be used for the communication of the User Equipment in the CS-domain of the GSM/UMTS mobile communication network, wherein in case that
-- the User Equipment is attached to the Evolved Packet System (EPS) and
-- the use of a CS-domain service is needed
the second radio interface is automatically activated for the communication of the User Equipment to the CS-domain of the GSM/UMTS mobile communication network, while an attachment and the communication of the User Equipment to the Evolved Packet System (EPS) is maintained via the first radio interface.

Furthermore, the present invention relates to a program comprising a computer readable program code for controlling a User Equipment attached to a core network of
-- a Packet Switched (PS) domain of a Universal Mobile Telecommunications System (UMTS) mobile communication network and
-- a CS-domain of a GSM/UMTS mobile communication network,
wherein the User Equipment comprises a first radio interface and a second radio interface, the first radio interface being able to be used for the communication of the User Equipment in the Packet Switched (PS) domain of the UMTS mobile communication network and the second radio interface being able to be used for the communication of the User Equipment in the CS-domain of the GSM/UMTS mobile communication network, wherein in case that
-- the User Equipment is attached to the Packet Switched (PS) domain of the UMTS mobile communication network and
-- the use of a CS-domain service is needed
the second radio interface is automatically activated for the communication of the User Equipment to the CS-domain of the GSM/UMTS mobile communication network, while an attachment and the communication of the User Equipment to the Packet Switched (PS) domain of the UMTS mobile communication network is maintained via the first radio interface.

The present invention also relates to computer program product comprising an inventive program.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

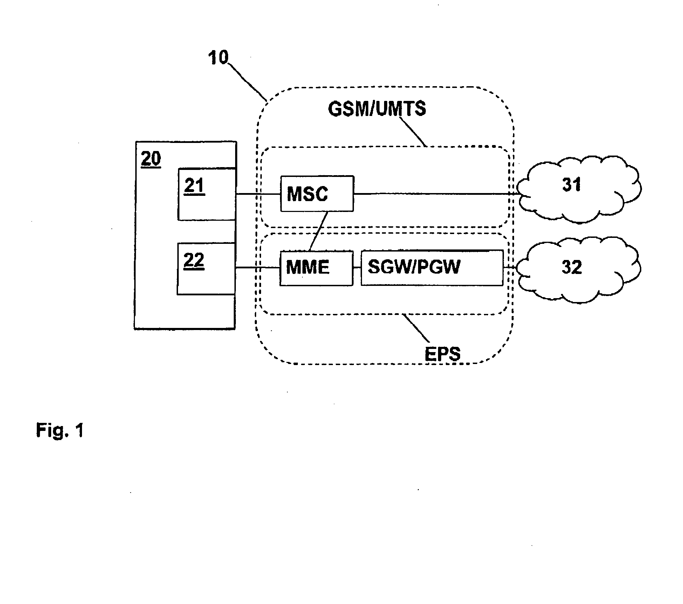

Figure 1 schematically illustrate a User Equipment (or a terminal) attached to an Evolved Packet System (EPS) and to a GSM/UMTS radio access network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a User Equipment 20 (or a terminal 20) attached to a core network 10 is schematically shown, the core network 10 being a core network 10 of an Evolved Packet System (EPS) and of the CS domain of a GSM/UMTS mobile communication network. The User Equipment 20 comprises a first radio interface 21 and a second radio interface 22. Thereby, it is possible according to the present invention that different radio parts or radio modules are used to support simultaneous access:
-- via a GERAN/UTRAN radio access towards the Circuit Switched (CS) part of the core network 10 that may be connected, e.g., to a PSTN (Public Switched Telephone Network) 31 (e.g. for making calls to the PSTN), and
-- via a E-UTRAN radio access to the Packet Switched (PS) part of the core network 10 that may be connected, e.g. to the internet 32 (e.g. for accessing a web page).

According to the present invention, the Packet Switched (PS) part of the core network 10 is used as the master and controls the usage of the Circuit Switched (CS) part when necessary, without disabling, or impacting otherwise, the Packet Switched (PS) part. The Packet Switched (PS) part of the core network 10 comprises the Mobility Management Entity (MME) related to the User Equipment 20 as well as the SGW/PGW (SGW: Serving GateWay; PGW: Packet data GateWay) entity. The Circuit Switched (CS) part of the core network 10 comprises the Mobile Switching Center (MSC).

## Claims

1. Method for the use of a Circuit Switched, CS, service by a User Equipment (20) attached to a core network (10) of
-- an Evolved Packet System, EPS, mobile communication network and
-- a CS-domain of a GSM/UMTS mobile communication network,
wherein the User Equipment (20) comprises a first radio interface (21) and a second radio interface (22), the first radio interface (21) being able to be used for a communication of the User Equipment (20) in the Evolved Packet System, EPS, and the second radio interface (22) being able to be used for a communication of the User Equipment (20) in the CS-domain of the GSM/UMTS mobile communication network, wherein in case that -
-- the User Equipment (20) is attached to the Evolved Packet System, EPS, and
-- the use of a CS-domain service is needed
the second radio interface (22) is automatically activated for the communication of the User Equipment (20) in the CS-domain of the GSM/UMTS mobile communication network, while an attachment and the communication of the User Equipment (20) to the Evolved Packet System, EPS, is maintained via the first radio interface (21).

2. Method for the use of a Circuit Switched, CS, service by a User Equipment (20) attached to a core network (10) of
-- a Packet Switched, PS, domain of a Universal Mobile Telecommunications System, UMTS, mobile communication network and
-- a CS-domain of a GSM/UMTS mobile communication network,
wherein the User Equipment (20) comprises a first radio interface (21) and a second radio interface (22), the first radio interface (21) being able to be used for a communication of the User Equipment (20) in the Packet Switched, PS, domain of the UMTS mobile communication network and the second radio interface (22) being able to be used for a communication of the User Equipment (20) in the CS-domain of the GSM/UMTS mobile communication network, wherein in case that
-- the User Equipment (20) is attached to the Packet Switched, PS, domain of the UMTS mobile communication network and
-- the use of a CS-domain service is needed
the second radio interface (22) is automatically activated for the communication of the User Equipment (20) in the CS-domain of the GSM/UMTS mobile communication network, while an attachment and the communication of the User Equipment (20) to the Packet Switched, PS, domain of the UMTS mobile communication network is maintained via the first radio interface (21).

3. Method according to claim 1, wherein in case that
-- the User Equipment (20) is attached to the Evolved Packet System, EPS, and
-- no CS-domain service is needed
the second radio interface (22) is automatically deactivated or at least partly or temporarily deactivated, while the attachment and the communication of the User Equipment (20) to the Evolved Packet System, EPS, is maintained via the first radio interface (21).

4. Method according to claim 2, wherein in case that
-- the User Equipment (20) is attached to the Packet Switched, PS, domain of a Universal Mobile Telecommunications System, UMTS, mobile communication network and
-- no CS-domain service is needed
the second radio interface (22) is automatically deactivated or at least partly or temporarily deactivated, while the attachment and the communication of the User Equipment (20) to the Packet Switched, PS, domain of a Universal Mobile Telecommunications System, UMTS, mobile communication network is maintained via the first radio interface (21).

5. Method according to claim 1, 2, 3 or 4, wherein the second radio interface (22) is used such that the carrier frequency used by the first radio interface and the carrier frequency used by the second radio interface are offset by a minimum offset frequency of at least 500 MHz, preferably by at least 1000 MHz.

6. Method according to one of the preceding claims, wherein a first control information is transmitted from the User Equipment (20) to the core network indicating that the User Equipment (20) comprises a first radio interface (21) and a second radio interface (22), the first radio interface (21) being able to be used for the communication of the User Equipment (20) in the Evolved Packet System, EPS, mobile communication network and the second radio interface (22) being able to be used for the communication of the User Equipment (20) in the CS-domain of a GSM/UMTS mobile communication network.

7. Method according to one of the preceding claims, wherein a second control information is transmitted from the core network to the User Equipment (20) indicating that the core network supports the simultaneous communication of the User Equipment in the Evolved Packet System, EPS, mobile communication network and the use of the CS-domain service of the GSM/UMTS mobile communication network.

8. User Equipment (20) suitable for a Circuit Switched, CS, service being attached to a core network or
-- an Evolved Packet System, EPS, mobile communication network and
-- a CS-domain of a GSM/UMTS mobile communication network,
wherein the User Equipment (20) comprises a first radio interface (21) and a second radio interface (22), the first radio interface (21) being adapted to be used for a communication of the User Equipment (20) in the Evolved Packet System, EPS, and the second radio interface (22) being adapted to be used for a communication of the User Equipment (20) in the CS-domain of a GSM/UMTS mobile communication network,
wherein in case that
-- the User Equipment (20) is attached to the Evolved Packet System, EPS, and
-- the use of a CS-domain service is needed
the second radio interface (22) is adapted to be automatically activated for the communication of the User Equipment (20) in the CS-domain of the GSM/UMTS mobile communication network, while the attachment and the communication of the User Equipment (20) to the Evolved Packet System, EPS, is maintained via the first radio interface (21).

9. User Equipment (20) suitable for a Circuit Switched, CS, service being attached to a core network of
-- a Packet Switched, PS, domain of a Universal Mobile Telecommunications System, UMTS, mobile communication network and
-- a CS-domain of a GSM/UMTS mobile communication network,
wherein the User Equipment (20) comprises a first radio interface (21) and a second radio interface (22), the first radio interface (21) being adapted to be used for a communication of the User Equipment (20) in the Packet Switched, PS, domain of the UMTS mobile communication network and the second radio interface (22) being adapted to be used for a communication of the User Equipment (20) in the CS-domain of a GSM/UMTS mobile communication network, wherein in case that
-- the User Equipment (20) is attached to the Packet Switched, PS, domain of the UMTS mobile communication network and
-- the use of a CS-domain service is needed
the second radio interface (22) is adapted to be automatically activated for the communication of the User Equipment (20) in the CS-domain of the GSM/UMTS mobile communication network, while the attachment and the communication of the User Equipment (20) to the Packet Switched, PS, domain of the UMTS mobile communication network is maintained via the first radio interface (21).

10. User Equipment (20) according to claim 8, wherein in case that
-- the User Equipment (20) is attached to the Evolved Packet System, EPS, and
-- no CS-domain service is needed
the second radio interface (22) is adapted to be automatically deactivated or at least partly or temporarily deactivated, while the attachment and the communication of the User Equipment (20) to the Evolved Packet System, EPS, is maintained via the first radio interface (21).

11. User Equipment (20) according to claim 9, wherein in case that
-- the User Equipment (20) is attached to the Packet Switched, PS, domain of a Universal Mobile Telecommunications System, UMTS, mobile communication network and
-- no CS-domain service is needed
the second radio interface (22) is adapted to be automatically deactivated or at least partly or temporarily deactivated, while the attachment and the communication of the User Equipment (20) to the Packet Switched, PS, domain of a Universal Mobile. Telecommunications System, UMTS, mobile communication network is maintained via the first radio interface (21).

12. User Equipment (20) according to one of claims 8 to 11, wherein the second radio interface (22) is used such that the carrier frequency used by the first radio interface and the carrier frequency used by the second radio interface are offset by a minimum offset frequency of at least 500 MHz, preferably by at least 1000 MHz.

13. Computer readable program code for controlling a User Equipment (20) attached to a core network of:
-- an Evolved Packet System, EPS, mobile communication network and
-- a CS-domain of a GSM/UMTS mobile communication network,
wherein the User Equipment (20) comprises a first radio interface (21) and a second radio interface (22), the first radio interface (21) being able to be used for the communication of the User Equipment (20) in the Evolved Packet System, EPS, and the second radio interface (22) being able to be used for the communication of the User Equipment (20) in the CS-domain of a GSM/UMTS mobile communication network, wherein in case that
-- the User Equipment (20) is attached to the Evolved Packet System, EPS, and
-- the use of a CS-domain service is needed
the second radio interface (22) is automatically activated for the communication of the User Equipment (20) in the CS-domain of the GSM/UMTS mobile communication network, while an attachment and the communication of the User Equipment (20) to the Evolved Packet System, EPS, is maintained via the first radio interface (21).

14. Computer readable program code for controlling a User Equipment attached to a core network of
-- a Packet Switched, PS, domain of a Universal Mobile Telecommunications System, UMTS, mobile communication network and
-- a CS-domain of a GSM/UMTS mobile communication network,
wherein the User Equipment comprises a first radio interface and a second radio interface, the first radio interface being able to be used for the communication of the User Equipment in the Packet Switched, PS, domain of the UMTS mobile communication network and the second radio interface being able to be used for the communication of the User Equipment in the CS-domain of the GSM/UMTS mobile communication network, wherein in case that
-- the User Equipment is attached to the Packet Switched, PS, domain of the UMTS mobile communication network and
-- the use of a CS-domain service is needed
the second radio interface is automatically activated for the communication of the User Equipment to the CS-domain of the GSM/UMTS mobile communication network, while an attachment and the communication of the User Equipment to the Packet Switched, PS, domain of the UMTS mobile communication network is maintained via the first radio interface.

15. Computer program product comprising a program according to claim 13 or 14.

## Patentansprüche

1. Verfahren zum Verwenden eines leitungsvermittelten Dienstes, CS-Dienstes, durch eine Anwendervorrichtung (20), die an ein Kernnetz (10)
- eines entwickelten Paketsystem-Mobilkommunikationsnetzes, EPS- Mobilkommunikationsnetzes, und
- einer CS-Domäne eines GSM/UMTS-Mobilkommunikationsnetzes
angeschlossen ist,
wobei die Anwendervorrichtung (20) eine erste Funkschnittstelle (21) und eine zweite Funkschnittstelle (22) umfasst, wobei die erste Funkschnittstelle (21) für eine Kommunikation der Anwendervorrichtung (20) in dem entwickelten Paketsystem, EPS, verwendet werden kann und die zweite Funkschnittstelle (22) für eine Kommunikation der Anwendervorrichtung (20) in der CS-Domäne des GSM/UMTS-Mobilkommunikationsnetzes verwendet werden kann, wobei in dem Fall, dass
- die Anwendervorrichtung (20) an das entwickelte Paketsystem, EPS, angeschlossen ist und
- die Verwendung eines CS-Domänendienstes benötigt wird,
die zweite Funkschnittstelle (22) automatisch für die Kommunikation der Anwendervorrichtung (20) in der CS-Domäne des GSM/UMTS-Mobilkommunikationsnetzes aktiviert wird, während ein Anschluss und die Kommunikation der Anwendervorrichtung (20) an das entwickelte/mit dem entwickelten Paketsystem, EPS, über die erste Funkschnittstelle (21) aufrechterhalten wird.

2. Verfahren zum Verwenden eines leitungsvermittelten Dienstes, CS-Dienstes, durch eine Anwendervorrichtung (20), die an ein Kernnetz (10)
- einer paketvermittelten Domäne, PS-Domäne, eines "Universal Mobile Telecommunikations System"-Mobilkommunikationsnetzes, UMTS-Mobilkommunikationsnetzes, und
- einer CS-Domäne eines GSM/UMTS-Mobilkommunikationsnetzes angeschlossen ist,
wobei die Anwendervorrichtung (20) eine erste Funkschnittstelle (21) und eine zweite Funkschnittstelle (22) umfasst, wobei die erste Funkschnittstelle (21) für eine Kommunikation der Anwendervorrichtung (20) in der paketvermittelten Domäne, PS-Domäne, des UMTS-Mobilkommunikationsnetzes verwendet werden kann und die zweite Funkschnittstelle (22) für eine Kommunikation der Anwendervorrichtung (20) in der CS-Domäne des GSM/UMTS-Mobilkommunikationsnetzes verwendet werden kann, wobei in dem Fall, dass
- die Anwendervorrichtung (20) an die paketvermittelte Domäne, PS-Domäne, des UMTS-Mobilkommunikationsnetzes angeschlossen ist und
- die Verwendung eines CS-Domänendienstes benötigt wird,
die zweite Funkschnittstelle (22) automatisch für die Kommunikation der Anwendervorrichtung (20) in der CS-Domäne des GSM/UMTS-Mobilkommunikationsnetzes aktiviert wird, während ein Anschluss und die Kommunikation der Anwendervorrichtung (20) an die paketvermittelte/mit der paketvermittelten Domäne, PS-Domäne, des UMTS-Mobilkommunikationsnetzes über die erste Funkschnittstelle (21) aufrechterhalten wird.

3. Verfahren nach Anspruch 1, wobei in dem Fall, dass
- die Anwendervorrichtung (20) an das entwickelte Paketsystem, EPS, angeschlossen ist und
- kein CS-Domänendienst benötigt wird,
die zweite Funkschnittstelle (22) automatisch deaktiviert wird oder wenigstens teilweise oder zeitweise deaktiviert wird, während der Anschluss und die Kommunikation der Anwendervorrichtung (20) an die entwickelte/mit dem entwickelten Paketsystem, EPS, über die erste Funkschnittstelle (21) aufrechterhalten wird.

4. Verfahren nach Anspruch 2, wobei in dem Fall, dass
- die Anwendervorrichtung (20) an die paketvermittelte Domäne, PS-Domäne, eines "Universal Mobile Telcommunications Systems"-Mobilkommunikationsnetzes, UMTS-Mobilkommunikationsnetzes, angeschlossen ist und
- kein CS-Domänendienst benötigt wird,
die zweite Funkschnittstelle (22) automatisch deaktiviert wird oder wenigstens teilweise oder zeitweise deaktiviert wird, während der Anschluss und die Kommunikation der Anwendervorrichtung (20) an die paketvermittelte/mit der paketvermittelten Domäne, PS-Domäne, eines "Universal-Mobile Telcommunications Systems"-Mobilkommunikationsnetzes, UMTS-Mobilkommunikationsnetzes, über die erste Funkschnittstelle (21) aufrechterhalten wird.

5. Verfahren nach Anspruch 1, 2, 3 oder 4, wobei die zweite Funkschnittstelle (22) so verwendet wird, dass die Trägerfrequenz, die von der ersten Funkschnittstelle verwendet wird, und die Trägerfrequenz, die von der zweiten Funkschnittstelle verwendet wird, um eine Mindestversatzfrequenz von wenigsten 500 MHz versetzt sind, vorzugsweise um wenigstens 1000 MHz.

6. Verfahren nach einem der vorhergehenden Ansprüche, wobei erste Steuerinformationen, die angeben, dass die Anwendervorrichtung (20) eine erste Funkschnittstelle (21) und eine zweite Funkschnittstelle (22) umfasst, von der Anwendervorrichtung (20) zu dem Kernnetz gesendet werden, wobei die erste Funkschnittstelle (21) für die Kommunikation der Anwendervorrichtung (20) in dem entwickelten Paketsystem-Mobilkommunikationsnetz, EPS-Mobilkommunikationsnetz, verwendet werden kann und die zweite Funkschnittstelle (22) für die Kommunikation der Anwendervorrichtung (20) in der CS-Domäne eines GSM/UMTS-Mobilkommunikationsnetzes verwendet werden kann.

7. Verfahren nach einem der vorhergehenden Ansprüche, wobei zweite Steuerinformationen, die angeben, dass das Kernnetz die gleichzeitige Kommunikation der Anwendervorrichtung in dem entwickelten Paketsystem-Mobilkommunikationsnetz, EPS-Mobilkommunikationsnetz, und die Verwendung des CS-Domänendienstes des GSM/UMTS-Mobilkommunikationsnetzes unterstützt, von dem Kernnetz zu der Anwendervorrichtung (20) gesendet werden.

8. Anwendervorrichtung (20), die für einen leitungsvermittelten Dienst, CS-Dienst, geeignet ist und die an ein Kernnetz
- eines entwickelten Paketsystem-Mobilkommunikationsnetzes, EPS- Mobilkommunikationsnetzes, und
- einer CS-Domäne eines GSM/UMTS-Mobilkommunikationsnetzes
angeschlossen ist,
wobei die Anwendervorrichtung (20) eine erste Funkschnittstelle (21) und eine zweite Funkschnittstelle (22) umfasst, wobei die erste Funkschnittstelle (21) ausgelegt ist, für eine Kommunikation der Anwendervorrichtung (20) in dem weiterentwickelten Paketsystem, EPS, verwendet zu werden, und die zweite Funkschnittstelle (22) ausgelegt ist, für eine Kommunikation der Anwendervorrichtung (20) in der CS-Domäne eines GSM/UMTS-Mobilkommunikationsnetzes verwendet zu werden, wobei in dem Fall, dass
- die Anwendervorrichtung (20) an das entwickelte Paketsystem, EPS, angeschlossen ist und
- die Verwendung eines CS-Domänendienstes benötigt wird,
die zweite Funkschnittstelle (22) ausgelegt ist, automatisch für die Kommunikation der Anwendervorrichtung (20) in der CS-Domäne des GSM/UMTS-Mobilkommunikationsnetzes aktiviert zu werden, während der Anschluss und die Kommunikation der Anwendervorrichtung (20) an das weiterentwickelte/mit dem weiterentwickelten Paketsystem, EPS, über die erste Funkschnittstelle (21) aufrechterhalten wird.

9. Anwendervorrichtung (20), die für einen leitungsvermittelten Dienst, CS-Dienst, geeignet ist und die an ein Kernnetz
- einer paketvermittelten Domäne, PS-Domäne, eines "Universal Mobile Telecommunikations System"-Mobilkommunikationsnetzes, UMTS-Mobilkommunikationsnetzes, und
- einer CS-Domäne eines GSM/UMTS-Mobilkommunikationsnetzes
angeschlossen ist,
wobei die Anwendervorrichtung (20) eine erste Funkschnittstelle (21) und eine zweite Funkschnittstelle (22) umfasst, wobei die erste Funkschnittstelle (21) ausgelegt ist, für eine Kommunikation der Anwendervorrichtung (20) in der paketvermittelten Domäne, PS-Domäne, des UMTS-Mobilkommunikationsnetzes verwendet zu werden, und die zweite Funkschnittstelle (22) ausgelegt ist, für eine Kommunikation der Anwendervorrichtung (20) in der CS-Domäne eines GSM/UMTS-Mobilkommunikationsnetzes verwendet zu werden, wobei in dem Fall, dass
- die Anwendervorrichtung (20) an die paketvermittelte Domäne, PS-Domäne, des UMTS-Mobilkommunikationsnetzes angeschlossen ist und
- die Verwendung eines CS-Domänendienstes benötigt wird,
die zweite Funkschnittstelle (22) ausgelegt ist, automatisch für die Kommunikation der Anwendervorrichtung (20) in der CS-Domäne des GSM/UMTS-Mobilkommunikationsnetzes aktiviert zu werden, während der Anschluss und die Kommunikation der Anwendervorrichtung (20) an die paketvermittelte/mit der paketvermittelten Domäne, PS-Domäne, des UMTS-Mobilkommunikationsnetzes über die erste Funkschnittstelle (21) aufrechterhalten wird.

10. Anwendervorrichtung (20) nach Anspruch 8, wobei in dem Fall, dass
- die Anwendervorrichtung (20) an dem entwickelten Paketsystem, EPS, angeschlossen ist und
- kein CS-Domänendienst benötigt wird,
die zweite Funkschnittstelle (22) ausgelegt ist, automatisch deaktiviert zu werden oder wenigstens teilweise oder zeitweise deaktiviert zu werden, während der Anschluss und die Kommunikation der Anwendervorrichtung (20) an das entwickelte/mit dem entwickelten Paketsystem, EPS, über die erste Funkschnittstelle (21) aufrechterhalten wird.

11. Anwendervorrichtung (20) nach Anspruch 9, wobei in dem Fall, dass
- die Anwendervorrichtung (20) an die paketvermittelte Domäne, PS-Domäne, eines "Universal Mobile Telecommunications System"-Mobilkommunikationsnetzes, UMTS-Mobilkommunikationsnetzes, angeschlossen ist, und
- kein CS-Domänendienst benötigt wird,
die zweite Funkschnittstelle (22) ausgelegt ist, automatisch deaktiviert zu werden oder wenigstens teilweise oder zeitweise deaktiviert zu werden, während der Anschluss und die Kommunikation der Anwendervorrichtung (20) an die paketvermittelte/mit der paketvermittelten Domäne, PS-Domäne, eines "Universal Mobile Telecommunications System"-Mobilkommunikationsnetzes, UMTS-Mobilkommunikationsnetzes, über die erste Funkschnittstelle (21) aufrechterhalten wird.

12. Anwendervorrichtung (20) nach einem der Ansprüche 8 bis 11, wobei die zweite Funkschnittstelle (22) so verwendet wird, dass die Trägerfrequenz, die von der ersten Funkschnittstelle verwendet wird, und die Trägerfrequenz, die von der zweiten Funkschnittstelle verwendet wird, um eine Mindestversatzfrequenz von wenigsten 500 MHz versetzt sind, vorzugsweise um wenigstens 1000 MHz.

13. Computerlesbarer Programmcode zum Steuern einer Anwendervorrichtung (20), die an ein Kernnetz
- eines weiterentwickelten Paketsystem-Mobilkommunikationsnetzes, EPS-Mobilkommunikationsnetzes, und
- einer CS-Domäne eines GSM/UMTS-Mobilkommunikationsnetzes
angeschlossen ist,
wobei die Anwendervorrichtung (20) eine erste Funkschnittstelle (21) und eine zweite Funkschnittstelle (22) umfasst, wobei die erste Funkschnittstelle (21) für die Kommunikation der Anwendervorrichtung (20) in dem entwickelten Paketsystem, EPS, verwendet werden kann und die zweite Funkschnittstelle (22) für die Kommunikation der Anwendervorrichtung (20) in der CS-Domäne des GSM/UMTS-Mobilkommunikationsnetzes verwendet werden kann, wobei in dem Fall, dass
- die Anwendervorrichtung (20) an das entwickelte Paketsystem, EPS, angeschlossen ist und
- die Verwendung eines CS-Domänendienstes benötigt wird,
die zweite Funkschnittstelle (22) automatisch für die Kommunikation der Anwendervorrichtung (20) in der CS-Domäne des GSM/UMTS-Mobilkommunikationsnetzes aktiviert wird, während ein Anschluss und die Kommunikation der Anwendervorrichtung (20) an das weiterentwickelte/mit dem weiterentwickelten Paketsystem, EPS, über die erste Funkschnittstelle (21) aufrechterhalten wird.

14. Computerlesbarer Programmcode zum Steuern einer Anwendervorrichtung, die an ein Kernnetz
- einer paketvermittelten Domäne, PS-Domäne, eines "Universal Mobile Telecommunications System"-Mobilkommunikationsnetzes, UMTS-Mobilkommunikationsnetzes, und
- einer CS-Domäne eines GSM/UMTS-Mobilkommunikationsnetzes angeschlossen ist,
wobei die Anwendervorrichtung eine erste Funkschnittstelle und eine zweite Funkschnittstelle umfasst, wobei die erste Funkschnittstelle für die Kommunikation der Anwendervorrichtung in der paketvermittelten Domäne, PS-Domäne, des UMTS-Mobilkommunikationsnetzes verwendet werden kann und die zweite Funkschnittstelle für die Kommunikation der Anwendervorrichtung in der CS-Domäne des GSM/UMTS-Mobilkommunikationsnetzes verwendet werden kann, wobei in dem Fall, dass
- die Anwendervorrichtung an die paketvermittelte Domäne, PS-Domäne, des UMTS-Mobilkommunikationsnetzes angeschlossen ist und
- die Verwendung eines CS-Domänendienstes benötigt wird,
die zweite Funkschnittstelle automatisch für die Kommunikation der Anwendervorrichtung zu der CS-Domäne des GSM/UMTS-Mobilkommunikationsnetzes aktiviert wird, während ein Anschluss und die Kommunikation der Anwendervorrichtung an die paketvermittelte/mit der paketvermittelten Domäne, PS-Domäne, des UMTS-Mobilkommunikationsnetzes über die erste Funkschnittstelle aufrechterhalten wird.

15. Computerprogrammprodukt, das ein Programm nach Anspruch 13 oder 14 umfasst.

## Revendications

1. Procédé d'utilisation d'un service commuté par circuits, CS, par un Equipement Utilisateur (20) attaché à un réseau coeur (10) de
- un réseau de communication mobile à Système par Paquets Evolué, EPS, et
- un domaine CS d'un réseau de communication mobile GSM/UMTS,
dans lequel l'Equipement Utilisateur (20) comprend une première interface radio (21) et une seconde interface radio (22), la première interface radio (21) pouvant être utilisée pour une communication de l'Equipement Utilisateur (20) dans le Système par Paquets Evolué, EPS, et la seconde interface radio (22) pouvant être utilisée pour une communication de l'Equipement Utilisateur (20) dans le domaine CS du réseau de communication mobile GSM/UMTS, dans lequel dans le cas où
- l'Equipement Utilisateur (20) est attaché au Système par Paquets Evolué, EPS, et
- l'utilisation d'un service du domaine CS est nécessaire
la seconde interface radio (22) est automatiquement activée pour la communication de l'Equipement Utilisateur (20) dans le domaine CS du réseau de communication mobile GSM/UMTS, tandis qu'un attachement et la communication de l'Equipement Utilisateur (20) au Système par Paquets Evolué, EPS, sont maintenus par l'intermédiaire de la première interface radio (21).

2. Procédé d'utilisation d'un service commuté par circuits, CS, par un Equipement Utilisateur (20) attaché à un réseau coeur (10) de
- un domaine commuté par paquets, PS, d'un réseau de communication mobile à Système de Télécommunications Mobile Universel, UMTS, et
- un domaine CS d'un réseau de communication mobile GSM/UMTS,
dans lequel l'Equipement Utilisateur (20) comprend une première interface radio (21) et une seconde interface radio (22), la première interface radio (21) pouvant être utilisée pour une communication de l'Equipement Utilisateur (20) dans le domaine commuté par paquets, PS, du réseau de communication mobile UMTS et la seconde interface radio (22) pouvant être utilisée pour une communication de l'Equipement Utilisateur (20) dans le domaine CS du réseau de communication mobile GSM/UMTS, dans lequel dans le cas où
- l'Equipement Utilisateur (20) est attaché au domaine commuté par paquets, PS, du réseau de communication mobile UMTS et
- l'utilisation d'un service du domaine CS est nécessaire
la seconde interface radio (22) est automatiquement activée pour la communication de l'Equipement Utilisateur (20) dans le domaine CS du réseau de communication mobile GSM/UMTS, tandis qu'un attachement et la communication de l'Equipement Utilisateur (20) au domaine commuté par paquets, PS, du réseau de communication mobile UMTS sont maintenus par l'intermédiaire de la première interface radio (21).

3. Procédé selon la revendication 1, dans lequel dans le cas où
- l'Equipement Utilisateur (20) est attaché au Système par Paquets Evolué, EPS, et
- aucun service du domaine CS est nécessaire
la seconde interface radio (22) est automatiquement désactivée ou au moins partiellement ou temporairement désactivée, tandis que l'attachement et la communication de l'Equipement Utilisateur (20) avec le Système par Paquets Evolué, EPS, sont maintenus par l'intermédiaire de la première interface radio (21).

4. Procédé selon la revendication 2, dans lequel dans le cas où
- l'Equipement Utilisateur (20) est attaché au domaine commuté par paquets, PS, d'un réseau de communication mobile à Système de Télécommunications Mobile Universel, UMTS, et
- aucun service du domaine CS est nécessaire
la seconde interface radio (22) est automatiquement désactivée ou au moins partiellement ou temporairement désactivée, tandis que l'attachement et la communication de l'Equipement Utilisateur (20) avec le domaine commuté par paquets, PS, d'un réseau de communication mobile à Système de Télécommunications Mobile Universel, UMTS, sont maintenus par l'intermédiaire de la première interface radio (21).

5. Procédé selon la revendication 1, 2, 3 ou 4, dans lequel la seconde interface radio (22) est utilisée de telle sorte que la fréquence porteuse utilisée par la première interface radio et la fréquence porteuse utilisée par la seconde interface radio soient décalées par une fréquence de décalage minimum d'au moins 500 MHz, de préférence par au moins 1000 MHz.

6. Procédé selon l'une quelconque des revendications précédentes, dans lequel une première information de commande est transmise par l'Equipement Utilisateur (20) au réseau coeur indiquant que l'Equipement Utilisateur (20) comprend une première interface radio (21) et une seconde interface radio (22), la première interface radio (21) pouvant être utilisée pour la communication de l'Equipement Utilisateur (20) dans le réseau de communication mobile à Système par Paquets Evolué, EPS, et la seconde interface radio (22) pouvant être utilisée pour la communication de l'Equipement Utilisateur (20) dans le domaine CS d'un réseau de communication mobile GSM/UMTS.

7. Procédé selon l'une quelconque des revendications précédentes, dans lequel une seconde information de commande est transmise par le réseau coeur à l'Equipement Utilisateur (20) indiquant que le réseau coeur supporte la communication simultanée de l'Equipement Utilisateur dans le réseau de communication mobile à Système par Paquets Evolué, EPS, et l'utilisation du service du domaine CS du réseau de communication mobile GSM/UMTS.

8. Equipement Utilisateur (20) convenant à un service commuté par circuits, CS, attaché à un réseau coeur de
- un réseau de communication mobile à Système par Paquets Evolué, EPS, et
- un domaine CS d'un réseau de communication mobile GSM/UMTS,
dans lequel l'Equipement Utilisateur (20) comprend une première interface radio (21) et une seconde interface radio (22), la première interface radio (21) étant adaptée pour être utilisée pour une communication de l'Equipement Utilisateur (20) dans le Système par Paquets Evolué, EPS, et la seconde interface radio (22) étant adaptée pour être utilisée pour une communication de l'Equipement Utilisateur (20) dans le domaine CS du réseau de communication mobile GSM/UMTS, dans lequel dans le cas où
- l'Equipement Utilisateur (20) est attaché au Système par Paquets Evolué, EPS, et
- l'utilisation d'un service du domaine CS est nécessaire
la seconde interface radio (22) est adaptée pour être automatiquement activée pour la communication de l'Equipement Utilisateur (20) dans le domaine CS du réseau de communication mobile GSM/UMTS, tandis qu'un attachement et la communication de l'Equipement Utilisateur (20) au Système par Paquets Evolué, EPS, sont maintenus par l'intermédiaire de la première interface radio (21).

9. Equipement Utilisateur (20) convenant à un service commuté par circuits, CS, attaché à un réseau coeur de
- un domaine commuté par paquets, PS, d'un réseau de communication mobile à Système de Télécommunications Mobile Universel, UMTS, et
- un domaine CS d'un réseau de communication mobile GSM/UMTS,
dans lequel l'Equipement Utilisateur (20) comprend une première interface radio (21) et une seconde interface radio (22), la première interface radio (21) étant adaptée pour être utilisée pour une communication de l'Equipement Utilisateur (20) dans le domaine commuté par paquets, PS, du réseau de communication mobile UMTS et la seconde interface radio (22) étant adaptée pour être utilisée pour une communication de l'Equipement Utilisateur (20) dans le domaine CS du réseau de communication mobile GSM/UMTS, dans lequel dans le cas où
- l'Equipement Utilisateur (20) est attaché au domaine commuté par paquets, PS, du réseau de communication mobile UMTS et
- l'utilisation d'un service du domaine CS est nécessaire
la seconde interface radio (22) est adaptée pour être automatiquement activée pour la communication de l'Equipement Utilisateur (20) dans le domaine CS du réseau de communication mobile GSM/UMTS, tandis qu'un attachement et la communication de l'Equipement Utilisateur (20) au domaine commuté par paquets, PS, du réseau de communication mobile UMTS sont maintenus par l'intermédiaire de la première interface radio (21).

10. Equipement Utilisateur (20) selon la revendication 8, dans lequel dans le cas où
- l'Equipement Utilisateur (20) est attaché au Système par Paquets Evolué, EPS, et
- aucun service du domaine CS est nécessaire
la seconde interface radio (22) est adaptée pour être automatiquement désactivée ou au moins partiellement ou temporairement désactivée, tandis que l'attachement et la communication de l'Equipement Utilisateur (20) avec le Système par Paquets Evolué, EPS, sont maintenus par l'intermédiaire de la première interface radio (21).

11. Equipement Utilisateur (20) selon la revendication 9, dans lequel dans le cas où
- l'Equipement Utilisateur (20) est attaché au domaine commuté par paquets, PS, d'un réseau de communication mobile à Système de Télécommunications Mobile Universel, UMTS, et
- aucun service du domaine CS est nécessaire
la seconde interface radio (22) est adaptée pour être automatiquement désactivée ou au moins partiellement ou temporairement désactivée, tandis que l'attachement et la communication de l'Equipement Utilisateur (20) avec le domaine commuté par paquets, PS, d'un réseau de communication mobile à Système de Télécommunications Mobile Universel, UMTS, sont maintenus par l'intermédiaire de la première interface radio (21).

12. Equipement Utilisateur (20) selon l'une quelconque des revendications 8 à 11, dans lequel la seconde interface radio (22) est utilisée de telle sorte que la fréquence porteuse utilisée par la première interface radio et la fréquence porteuse utilisée par la seconde interface radio soient décalées par une fréquence de décalage minimum d'au moins 500 MHz, de préférence par au moins 1000 MHz.

13. Code de programme lisible par ordinateur pour commander un Equipement Utilisateur (20) attaché à un réseau coeur de :
- un réseau de communication mobile à Système par Paquets Evolué, EPS, et
- un domaine CS d'un réseau de communication mobile GSM/UMTS,
dans lequel l'Equipement Utilisateur (20) comprend une première interface radio (21) et une seconde interface radio (22), la première interface radio (21) pouvant être utilisée pour une communication de l'Equipement Utilisateur (20) dans le Système par Paquets Evolué, EPS, et la seconde interface radio (22) pouvant être utilisée pour une communication de l'Equipement Utilisateur (20) dans le domaine CS du réseau de communication mobile GSM/UMTS, dans lequel dans le cas où
- l'Equipement Utilisateur (20) est attaché au Système par Paquets Evolué, EPS, et
- l'utilisation d'un service du domaine CS est nécessaire
la seconde interface radio (22) est automatiquement activée pour la communication de l'Equipement Utilisateur (20) dans le domaine CS du réseau de communication mobile GSM/UMTS, tandis qu'un attachement et la communication de l'Equipement Utilisateur (20) au Système par Paquets Evolué, EPS, sont maintenus par l'intermédiaire de la première interface radio (21).

14. Code de programme lisible par ordinateur pour commander un Equipement Utilisateur attaché à un réseau coeur de :
- un domaine commuté par paquets, PS, d'un réseau de communication mobile de Système de Télécommunications Mobile Universel, UMTS, et
- un domaine CS d'un réseau de communication mobile GSM/UMTS,
dans lequel l'Equipement Utilisateur comprend une première interface radio et une seconde interface radio, la première interface radio pouvant être utilisée pour une communication de l'Equipement Utilisateur dans le domaine commuté par paquets, PS, du réseau de communication mobile UMTS et la seconde interface radio pouvant être utilisée pour une communication de l'Equipement Utilisateur dans le domaine CS du réseau de communication mobile GSM/UMTS, dans lequel dans le cas où
- l'Equipement Utilisateur est attaché au domaine commuté par paquets, PS, du réseau de communication mobile UMTS et
- l'utilisation d'un service du domaine CS est nécessaire
la seconde interface radio est automatiquement activée pour la communication de l'Equipement Utilisateur dans le domaine CS du réseau de communication mobile GSM/UMTS, tandis qu'un attachement et la communication de l'Equipement Utilisateur au domaine commuté par paquets, PS, du réseau de communication mobile UMTS sont maintenus par l'intermédiaire de la première interface radio.

15. Produit de programme informatique comprenant un programme selon la revendication 13 ou 14.
